# FASCICULE DE BREVET EUROPEEN

(11) **EP 2 449 753 B1**
(45) Date de publication et mention de la délivrance du brevet: **13.03.2013**
(21) Numéro de dépôt: 10727849.1
(22) Date de dépôt: 28.05.2010
(51) Int. Cl.: H04M 1/21, H04M 1/66, E05B 37/12, G06F 3/02, G06F 3/033, H04M 1/02, H04M 1/23

(54) **APPAREIL ELECTRONIQUE**
ELEKTRONISCHES GERÄT
ELECTRONIC APPARATUS

(30) Priorité: 30.06.2009 EP 09290506
(43) Date de publication de la demande: 09.05.2012
(73) Titulaire: CELSIUS X VI II, 75011 Paris (FR)
(72) Inventeur: ANDRÉ, Jean-Marie, F-73100 Aix-les-Bains (FR); PRUVOT, Thomas, F-75019 Paris (FR)
(74) Mandataire: Micheli & Cie SA
(86) Numéro de dépôt international: PCT/IB2010/001265
(87) Numéro de publication internationale: WO 2011/001234

(56) Documents cités:
- EP-A2- 1 388 778
- EP-A2- 1 670 223
- WO-A1-2004/100510
- US-A1- 2005 280 500
- US-A1- 2006 012 584

## Description

La présente invention se rapporte à un appareil électronique portable comprenant un système d'authentification de l'utilisateur protégeant l'accès à certaines fonctions ou données de l'appareil.

En général, les appareils électroniques portables, tels que les téléphones portables ou autres organiseurs, permettent à l'utilisateur de protéger des données personnelles enregistrées sur ledit appareil. Pour accéder auxdites données, l'utilisateur doit alors dûment s'authentifier au moyen d'un code numérique (code PIN verrouillant une carte SIM sur un téléphone portable par exemple) ou d'un mot de passe composé sur le clavier de l'appareil.

On connaît par la demande de brevet internationale WO 2004/100510 un téléphone portable comprenant un dispositif rotatif de saisie permettant à l'utilisateur de composer un numéro de téléphone ou saisir un texte, un mot de passe ou un code. Ce dispositif rotatif comprend un élément rotatif annulaire pouvant être pivoté par l'utilisateur pour faire défiler une séquence de symboles sur un écran et un bouton situé dans l'ouverture centrale de l'organe rotatif et pouvant être pressé pour sélectionner l'un des symboles de la séquence. Dans une variante, la fonction du bouton de sélection est assurée par l'élément rotatif, alors agencé pour pouvoir être aussi actionné par pression. Ce dispositif nécessite, pour entrer un mot de passe ou un code, l'utilisation d'un écran ainsi que des actions manuelles différentes, rotations et pressions.

La demande de brevet européen EP 1670223 décrit un téléphone portable en deux parties pouvant prendre une position ouverte et une position fermée et comprenant des moyens de verrouillage mécanique capables de verrouiller le téléphone dans sa position fermée. Des moyens d'authentification permettent l'authentification de l'utilisateur lorsque le téléphone est dans sa position fermée et commandent le déverrouillage du téléphone uniquement lorsque l'utilisateur a été authentifié. Ces moyens d'authentification peuvent comprendre un identificateur d'empreintes digitales, un identificateur d'iris, un identificateur de voix ou un clavier.

Le but de la présente invention est la réalisation d'un appareil électronique portable, notamment un téléphone portable, offrant un système d'authentification de l'utilisateur des données efficace et fiable et dont l'authentification se fait de manière ludique.

La présente invention a pour objet un appareil électronique portable comprenant un organe rotatif pouvant être pivoté par l'utilisateur pour composer une combinaison comprenant plusieurs éléments, des moyens de blocage de l'accès à au moins une fonction ou donnée dudit appareil et des moyens de liaison connectant l'organe rotatif aux moyens de blocage et agencés pour commander aux moyens de blocage d'autoriser l'accès à ladite au moins une fonction ou donnée lorsque la combinaison composée par l'utilisateur coïncide avec une combinaison prédéterminée, caractérisé en ce que l'organe rotatif et les moyens de liaison sont agencés pour permettre la composition de la combinaison par des rotations successives de l'organe rotatif dans des sens alternés, l'amplitude de chacune desdites rotations étant représentative d'un élément correspondant de la combinaison, chaque changement du sens de rotation de l'organe rotatif validant la composition de l'élément correspondant à la rotation précédant immédiatement ledit changement.

Des modes de réalisation particuliers de l'invention sont définis dans les revendications dépendantes annexées 2 à 12.

La présente invention offre un moyen à la fois fiable et ludique pour l'utilisateur de s'authentifier et de déverrouiller l'accès à une fonction ou donnée d'un appareil électronique portable comme un téléphone portable notamment.

Une combinaison protégeant l'accès à une fonction ou donnée de l'appareil électronique portable a préalablement été déterminée. Pour accéder à ladite fonction ou donnée lorsque les moyens de blocage sont actifs, l'utilisateur compose la combinaison en faisant pivoter l'organe rotatif d'une certaine amplitude angulaire tantôt dans un sens et tantôt dans l'autre, jusqu'à ce que tous les éléments de la combinaison aient été composés, à la manière de l'ouverture d'un coffre-fort L'utilisation d'un écran n'est pas nécessaire pour la composition de la combinaison. De plus, étant donné que la validation des éléments de la combinaison s'effectue simplement en changeant le sens de rotation de l'organe rotatif, la présente invention évite à l'utilisateur d'avoir à presser l'organe rotatif ou un bouton auxiliaire pour cette validation et évite au concepteur d'avoir à prévoir un tel bouton auxiliaire ou à rendre l'organe rotatif également actionnable par pression.

Dans un premier mode de réalisation de l'invention, les moyens de blocage comprennent le processeur principal de l'appareil électronique portable a même de verrouiller et déverrouiller l'accès à une fonction ou donnée dudit appareil. Les moyens de liaison quant à eux comprennent un engrenage mécanique reliant l'organe rotatif à deux roues codeuses et une unité de traitement électronique, typiquement un microcontrôleur incluant un microprocesseur, une mémoire non volatile et une interface d'entrée-sortie, connectée d'une part aux roues codeuses et d'autre part au processeur principal de l'appareil. Les roues codeuses convertissent les rotations successives de l'organe rotatif en une succession d'impulsions électriques et les transmettent au microprocesseur du microcontrôleur via l'interface d'entrée-sortie dudit microcontrôleur. Celui-ci détermine alors la combinaison composée par l'utilisateur, la compare à la combinaison prédéterminée et commande au processeur principal de déverrouiller l'accès à la fonction ou donnée de l'appareil électronique portable si lesdites combinaisons correspondent.

Dans un second mode de réalisation, l'appareil électronique portable comprend un corps principal et un clapet articulé audit corps par une charnière. Les moyens de blocage comprennent un verrou mécanique actionné par un moteur électrique et peuvent bloquer l'ouverture du clapet par rapport au corps principal. Dans ce mode de réalisation, la combinaison composée par l'utilisateur au moyen de l'organe rotatif déverrouille mécaniquement le clapet pour permettre son ouverture. Les moyens de liaison peuvent être semblables à ceux du premier mode de réalisation, mais dans ce second mode de réalisation, le microcontrôleur après avoir vérifié la concordance entre la combinaison composée par l'utilisateur à celle prédéterminée commande au moteur électrique le déverrouillage du clapet.

Les dessins annexés illustrent schématiquement et à titre d'exemple différents modes de réalisation d'un appareil électronique portable selon l'invention.
La figure 1 illustre un premier mode de réalisation où l'appareil électronique portable selon l'invention est un téléphone portable muni d'une montre mécanique ou à quartz placée sur une des faces extérieures de l'appareil.
Les figures 2a à 2d illustrent les moyens de liaison utilisés dans le téléphone portable illustré à la figure 1 :

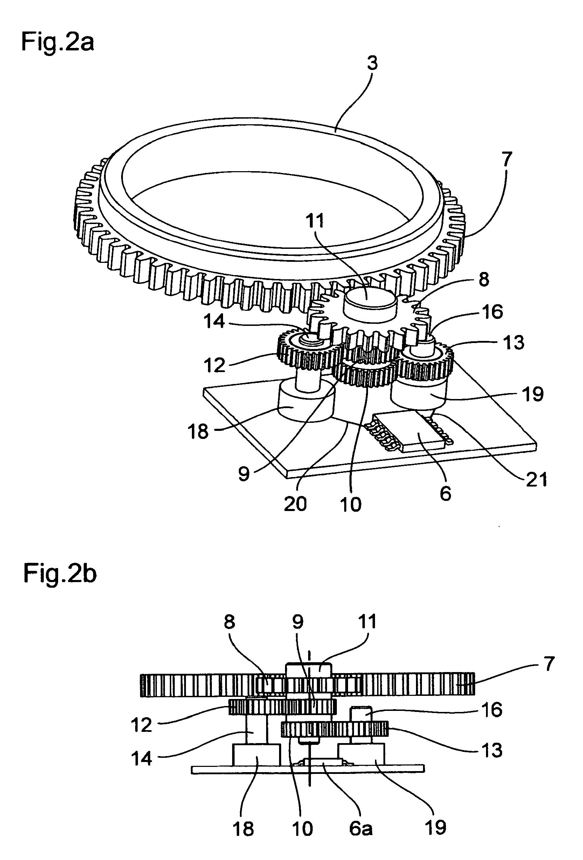

   - La figure 2a est une vue en perspective du dessus desdits moyens de liaison;
   - La figure 2b est une vue de profil des moyens de liaison illustrés à la figure 2a ;

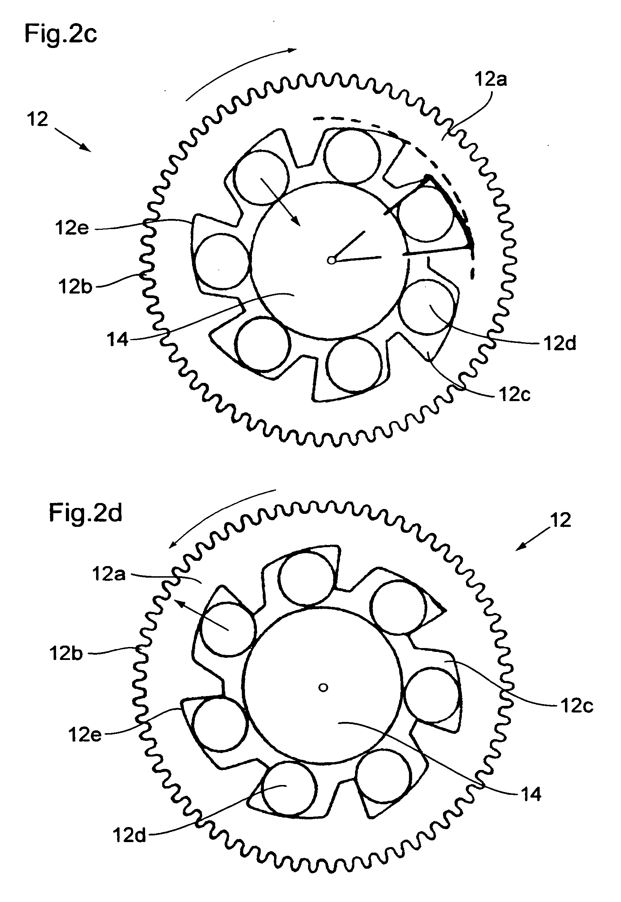

   - Les figures 2c et 2d sont des vues en coupe transversale d'un mobile d'embrayage-débrayage compris dans les moyens de liaison illustrés aux figures 2a et 2b.

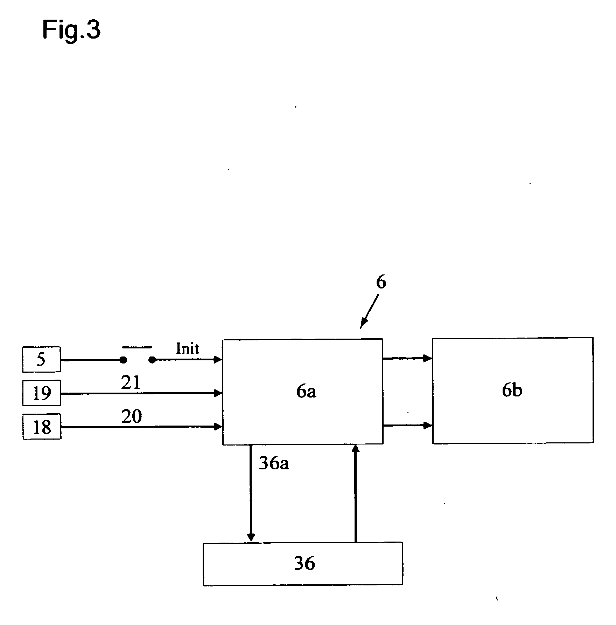

La figure 3 représente schématiquement le microcontrôleur illustré aux figures 2a et 2b

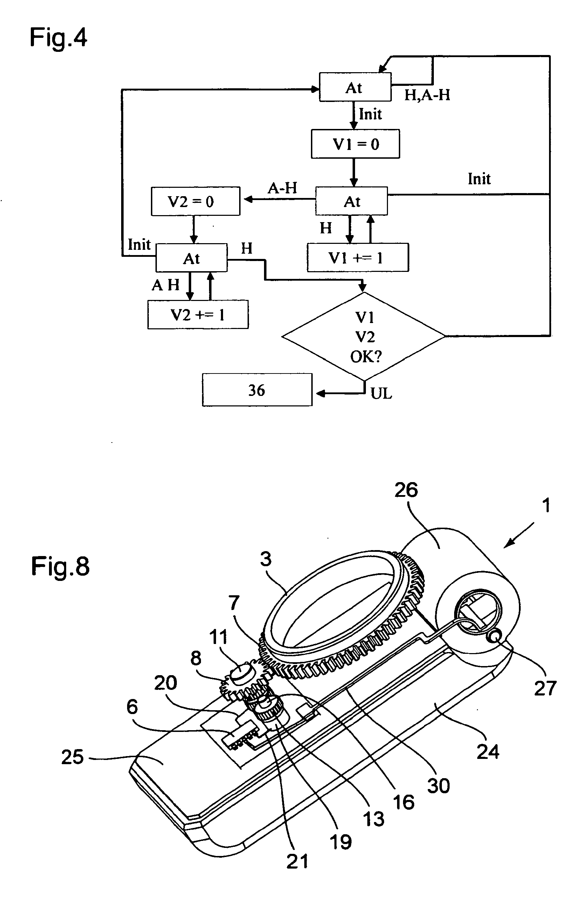

La figure 4 est un schéma d'un algorithme mis en oeuvre par le microcontrôleur illustré aux figures 2a, 2b et 3 pour déterminer et comparer la combinaison composée par l'utilisateur avec celle prédéterminée.

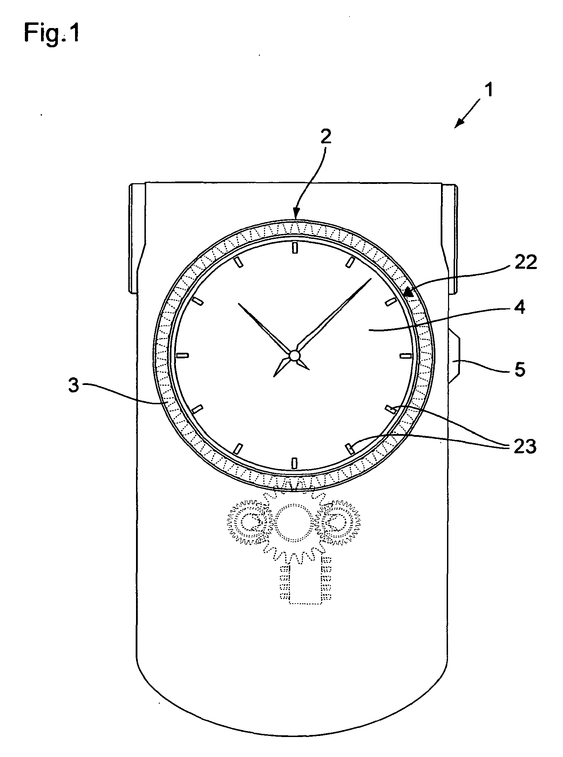

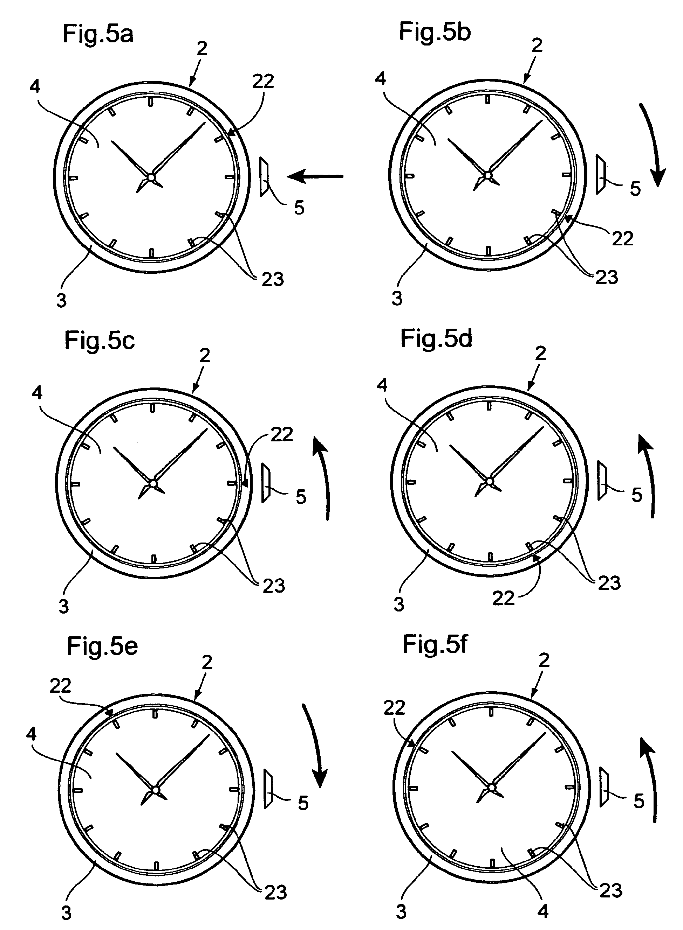

Les figures 5a à 5f illustrent un exemple d'utilisation de l'appareil électronique portable selon l'invention illustré aux figures 1 à 4 :
   - La figure 5a illustre la position de la lunette pivotante dans son état initial, avant que l'utilisateur n'ait démarré le processus d'authentification.
   - La figure 5b illustre la position de la lunette pivotante lorsque l'utilisateur a composé le premier nombre de la combinaison.
   - La figure 5c illustre une position intermédiaire de la lunette pivotante entre la composition du premier et du second nombre de la combinaison.
   - La figure 5d illustre la position de la lunette pivotante lorsque l'utilisateur a composé le second nombre de la combinaison.
   - La figure 5e illustre la position de la lunette pivotante lorsque l'utilisateur a composé le troisième nombre de la combinaison.
   - La figure 5f illustre la position finale de la lunette pivotante lorsque l'utilisateur a composé tous les éléments de la combinaison.

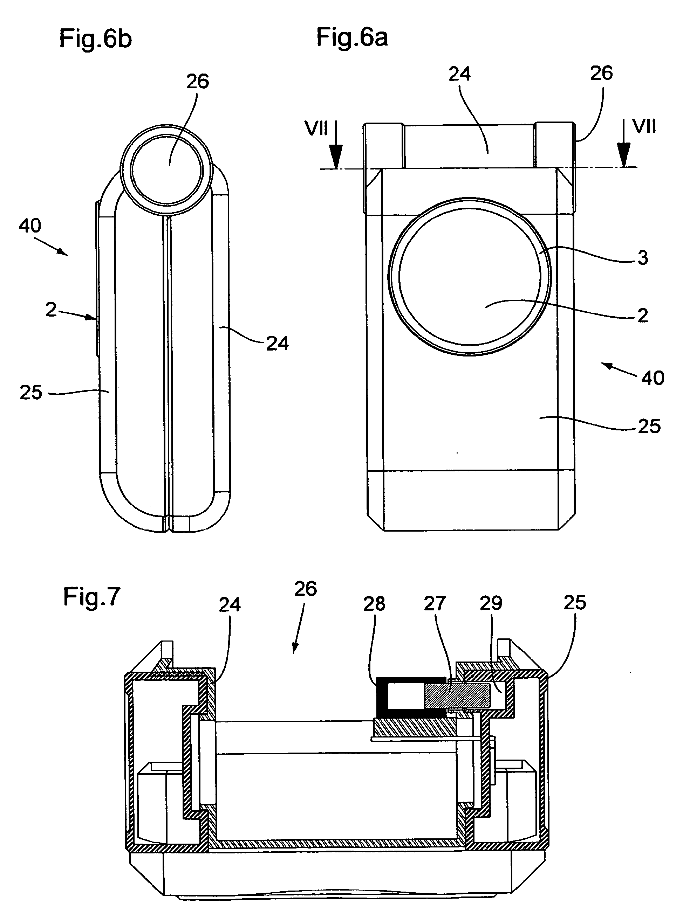

Les figures 6a et 6b illustrent un second mode de réalisation où l'appareil électronique portable selon l'invention est un téléphone portable à clapet comprenant un verrou mécanique bloquant l'ouverture du clapet :
   - La figure 6a est une vue de face du téléphone portable selon le second mode de réalisation.
   - La figure 6b est une vue de profil du téléphone portable selon le second mode de réalisation illustré à la figure 6a mettant en évidence le clapet.
La figure 7 est une vue en coupe du téléphone portable selon le second mode de réalisation prise selon la ligne VII-VII de la figure 6a et illustrant la charnière reliant le corps principal et le clapet du téléphone portable.
La figure 8 est une vue en perspective des moyens de liaison et du verrou mécanique du téléphone portable selon le second mode de réalisation.

Dans ce qui suit, les termes « horaire » et « antihoraire » sont interchangeables.

Dans un premier mode de réalisation de l'invention illustré aux figures 1 à 5, l'appareil électronique portable selon l'invention est un téléphone portable 1 comportant une montre 2 (à quartz ou mécanique) sur une de ses faces extérieures.

La montre 2 comprend entre autres une lunette pivotante 3 entourant un cadran 4. Les autres composants de la montre 2 ne sont pas décrits plus en détail ici.

Le téléphone portable 1 comprend un bouton d'initialisation 5 placé sur le côté du téléphone portable 1. Un microcontrôleur 6 placé à l'intérieur du téléphone portable 1 est connecté à la lunette pivotante 3 par des moyens électromécaniques qui seront décrits plus loin et au bouton d'initialisation 5. Le microcontrôleur 6 illustré schématiquement à la figure 3 comprend un microprocesseur 6a, une mémoire non volatile 6b ainsi qu'une interface d'entrée-sortie. Le microcontrôleur et ses composants sont bien connus de l'homme du métier et ne seront pas décrits plus en détails ici.

Le microcontrôleur 6 est connecté au processeur principal 36 du téléphone portable 1 au moyen d'une connexion électrique 36a représentée sur la figure 3. Le processeur principal 36 gère, de manière connue en soi, le fonctionnement du téléphone portable. Notamment, il bloque l'utilisation du téléphone tant qu'un code ou combinaison n'a pas été composé par l'utilisateur. Il peut en variante bloquer l'accès à seulement certaines fonctions du téléphone et/ou certaines données confidentielles (contacts, notes personnelles...) enregistrées dans le téléphone.

Sur réception d'un signal du microcontrôleur 6, consécutif à la composition de la combinaison par l'intermédiaire de la lunette 3, le processeur principal 36 déverrouille l'accès à l'utilisation du téléphone portable ou auxdites fonctions et/ou données. L'accès à l'utilisation du téléphone ou auxdites fonctions et/ou données est ensuite de nouveau verrouillé par l'actionnement d'un bouton prévu à cet effet, l'expiration d'une temporisation prédéterminée ou l'extinction du téléphone par exemple. En variante également, le processeur principal 36 peut déverrouiller l'accès à l'utilisation du téléphone en cas d'appel entrant.

Les figures 2a et 2b illustrent les moyens électromécaniques de liaison entre la lunette pivotante 3 et le microcontrôleur 6.

La lunette pivotante 3 comprend une partie supérieure extérieure manipulable par l'utilisateur et une partie inférieure située à l'intérieur du téléphone 1 et portant une denture 7 sur toute sa circonférence. La denture 7 est en prise avec une roue de comptage 8.

Des première et deuxième roues dentées 9,10 sont pivotées coaxialement à la roue de comptage 8 et sont solidaires de l'axe 11 de ladite roue de comptage 8. Les première et deuxième roues dentées 9,10 sont chacune en prise avec respectivement un premier et un second mobile d'embrayage-débrayage 12,13.

Le premier mobile d'embrayage-débrayage 12 comprend une première roue d'embrayage 12a (cf. figures 2c, 2d) pivotée librement sur l'axe 14 d'une première roue codeuse 18. La première roue d'embrayage 12a possède une denture extérieure 12b et une série d'entailles intérieures 12c dans lesquelles sont logés des galets 12d qui entraînent ou libèrent l'axe 14 de la première roue codeuse 18 selon le sens de rotation de la roue d'embrayage 12a. Dans ce but, les entailles 12c ont des parois de fond 12e excentriques, c'est-à-dire de rayon variable. En position d'embrayage illustrée à la figure 2c, la première roue d'embrayage 12a, entraînée par la première roue dentée 9, tourne dans le sens horaire par exemple et les galets 12d sont pressés par une partie de la paroi 12e des entailles 12c de plus petit rayon contre l'axe 14 de la première roue codeuse 18 et entraînent celui-ci. En position de débrayage illustrée à la figure 2d, la roue 12a tourne dans le sens antihoraire, les galets 12d sont alors logés dans une portion de plus grande profondeur des entailles 12c et libèrent l'axe 14 qui n'est pas entraîné

De manière équivalente, le second mobile d'embrayage-débrayage 13 comprend une seconde roue d'embrayage pivotée librement sur l'axe 16 d'une seconde roue codeuse 19 et en prise avec la seconde roue dentée 10. La seconde roue d'embrayage possède une denture extérieure et des entailles dans lesquelles sont logés des galets. Les entailles ont des parois de fond excentriques de manière à ce que les galets entraînent ou libèrent l'axe 16 selon le sens de rotation de la seconde roue d'embrayage.

Dans ce mode de réalisation, le premier mobile d'embrayage-débrayage 12 en prise avec la première roue dentée 9 entraîne l'axe 14 de la première roue codeuse 18 lorsque ladite première roue dentée 9 et donc la lunette 3 pivote dans le sens horaire tandis que le second mobile d'embrayage-débrayage 13 entraîne l'axe 16 de la seconde roue codeuse 19 lorsque la seconde roue dentée 10 en prise avec ledit second mobile 13 tourne dans le sens antihoraire. L'inverse est également possible.

Les premier et second mobiles d'embrayage-débrayage 12, 13 décrits ci-dessus utilisent des galets, mais ils pourraient être remplacés par d'autres mobiles d'embrayage équivalents, à cliquet ou à ressort par exemple.

Chacune des première et seconde roues codeuses 18, 19 convertit la rotation de son axe respectif 14,16 en une succession d'impulsions électriques dont le nombre est proportionnel à l'amplitude angulaire de ladite rotation. Un exemple de roue codeuse idoine est l'interrupteur rotatif SRBQ290301 fabriqué par la société ALPS®. Il est évident que l'homme du métier peut recourir à tout autre dispositif approprié.

Les impulsions électriques sont ensuite transmises par les première et seconde roues codeuses 18,19 au microprocesseur 6a du microcontrôleur 6 au moyen respectivement d'une première et d'une seconde connexion électrique 20,21 illustrées sur les figures 2 et 3.

De manière générale, les moyens de conversion permettant de convertir la rotation de la lunette pivotante 3 en un signal lisible par le microprocesseur 6a du microcontrôleur 6 peuvent comprendre tout type d'engrenage et de connexion électronique appropriés.

Dans le mode de réalisation illustré aux figures 1 et 2, la lunette pivotante 3 comporte un index 22 coopérant avec la graduation des heures 23 du cadran 4-L'utilisateur peut ainsi aisément se repérer et tourner la lunette pivotante 3 d'un nombre de pas déterminés par rapport à la graduation 23, chaque pas correspondant à une division de la graduation 23. Des moyens d'indexage utilisant par exemple une ou plusieurs billes d'encliquetage peuvent être prévus pour définir douze positions stables de la lunette 3 correspondant aux douze repères de la graduation 23.

De manière générale, la combinaison authentifiant l'utilisateur est préenregistrée dans la mémoire non volatile 6b et comprend au moins deux éléments. Dans le mode de réalisation décrit ci-dessus, ces éléments sont choisis parmi les nombres de 1 à 12, correspondant aux douze heures indiquées par la graduation 23 du cadran 4.

De préférence, dans le mode déverrouillé, la combinaison peut être modifiée par l'utilisateur, par l'intermédiaire du clavier et de l'écran du téléphone, et l'utilisateur peut également choisir quelle(s) fonction(s) et/ou donnée(s) de l'appareil il désire protéger par ladite combinaison.

Pour pouvoir accéder à une fonction ou donnée protégée sur l'appareil électronique portable 1, l'utilisateur doit d'abord presser le bouton d'initialisation 5. Il compose ensuite successivement chacun des éléments de la combinaison en pivotant l'organe rotatif, la lunette pivotante 3 dans ce mode de réalisation, du nombre de pas correspondant auxdits éléments en alternant le sens de rotation entre chaque élément. Le microcontrôleur 6 détermine ensuite la combinaison composée par l'utilisateur et la compare à celle préenregistrée dans la mémoire non volatile 6b dudit microcontrôleur et dans le cas où ces deux combinaisons coïncident, commande au processeur principal 36 du téléphone 1 d'autoriser l'accès aux fonctions et/ou données protégées.

A tout moment, une pression sur le bouton d'initialisation 5 permet à l'utilisateur d'interrompre le processus d'authentification et de recommencer à composer la combinaison.

La figure 4 décrit un exemple d'algorithme mis en oeuvre par le microcontrôleur 6 pour déterminer la combinaison composée par l'utilisateur au moyen de la lunette pivotante 3. Dans cet exemple, la combinaison est constituée de deux éléments ou nombres.

Dans ce premier mode de réalisation, le microprocesseur 6a du microcontrôleur 6 est susceptible de recevoir en particulier trois types de signaux distincts : le signal Init reçu à la suite de la pression par l'utilisateur du bouton d'initialisation 5, le signal H transmis par l'une des première et seconde roues codeuses 18,19 lorsque l'utilisateur pivote la lunette pivotante 3 d'un pas dans le sens horaire et le signal A-H transmis par l'autre des première et seconde roues codeuses 18,19 lorsque l'utilisateur pivote la lunette pivotante 3 d'un pas dans le sens antihoraire.

Le microprocesseur 6a est également susceptible d'envoyer le signal UL au processeur principal 36 qui, sur réception dudit signal, déverrouille l'accès aux fonctions et/ou données protégées.

Au début du processus d'authentification, le microprocesseur 6a est en attente dans l'état At et le processeur principal 36 verrouille l'accès aux fonctions et/ou données protégées. Dès réception du signal Init, le microprocesseur 6a initialise à zéro une première variable V1 correspondant au premier élément de la combinaison. Il incrémente la variable V1 à chaque réception du signal H, c'est-à-dire, à chaque rotation d'un pas dans le sens horaire de la lunette pivotante 3 par l'utilisateur. L'incrémentation se poursuit jusqu'à ce que l'utilisateur tourne la lunette pivotante 3 d'un pas dans le sens antihoraire, envoyant le signal A-H au microprocesseur 6a. A ce moment, ledit microprocesseur 6a initialise à zéro une seconde variable V2 correspondant au deuxième élément de la combinaison. Cette variable V2 est ensuite incrémentée à chaque réception du signal A-H, correspondant à chaque pas de la lunette pivotante 3 dans le sens antihoraire, jusqu'à ce que le signal H soit reçu par le microprocesseur 6a, c'est-à-dire jusqu'à ce que l'utilisateur pivote la lunette 3 d'un pas dans le sens opposé (horaire).

A ce stade, la valeur des variables V1 et V2 détermine la combinaison faite par l'utilisateur. Le microprocesseur 6a compare alors cette combinaison avec la combinaison préenregistrée dans la mémoire non volatile 6b du microcontrôleur 6 et commande, en envoyant le signal UL au processeur principal 36, le déverrouillage des fonctions et/ou données protégées seulement si les deux combinaisons coïncident. Dans le cas contraire, le microprocesseur 6a repasse dans l'état At.

Si la combinaison préenregistrée contient plus que deux éléments, le microprocesseur 6a initialise à zéro une troisième variable V3 correspondant au troisième élément de la combinaison, dès qu'il reçoit le signal H après initialisation et incrémentation de la variable V2. Cette variable V3 est ensuite incrémentée à chaque pas de rotation de la lunette 3 dans le sens horaire, jusqu'à ce que la lunette 3 soit tournée d'un pas dans le sens antihoraire, ce qui initialise une quatrième variable V4 ou déclenche la comparaison avec la combinaison enregistrée dans le cas où celle-ci est constituée de trois éléments. L'algorithme se poursuit jusqu'à ce que l'utilisateur ait composé autant d'éléments qu'en contient la combinaison.

On remarque que dans cet algorithme, pour déclencher le processus de comparaison des combinaisons composée et préenregistrée, l'utilisateur pivote la lunette pivotante 3 dans le sens opposé à celui dans lequel il a fait pivoter la lunette pivotante 3 pour composer le dernier élément. De plus dans cette algorithme, à tout moment, la réception du signal Init réinitialise le microprocesseur et le met en état At.

En variante, on pourrait imaginer que lorsque l'utilisateur a composé le dernier élément de la combinaison, il presse à nouveau sur le bouton d'initialisation 5, le signal Init ayant alors la fonction de lancer la comparaison entre les combinaisons composée et préenregistrée et d'ensuite réinitialiser le microprocesseur 6a.

Dans une autre variante, on pourrait supprimer le bouton d'initialisation 5 et faire en sorte que le microprocesseur 6a soit réinitialisé après une temporisation prédéterminée correspondant à un certain temps, par exemple une minute, de non actionnement de la lunette pivotante 3.

Les figures 5a à 5f illustrent le processus d'authentification de l'utilisateur du téléphone portable 1 à l'aide des moyens décrits ci-dessus à travers un exemple précis.

Pour plus de clarté et sans perdre de généralité, nous supposerons dans cet exemple que le premier mobile d'embrayage-débrayage 12 en prise avec la première roue dentée 9 entraîne l'axe 14 de la première roue codeuse 18, lorsque la lunette pivotante 3 tourne dans le sens horaire ; tandis que le second mobile d'embrayage-débrayage 13 en prise avec la seconde roue dentée 10 entraîne l'axe 16 de la seconde roue codeuse 19, lorsque la lunette pivotante 3 tourne dans le sens antihoraire.

De même, nous supposerons que l'utilisateur doit tourner la lunette 3 dans le sens horaire pour composer le premier élément de la combinaison et ensuite alterner le sens entre chaque élément. On aurait pu aussi choisir de tourner la lunette dans le sens antihoraire pour le premier élément, l'important étant d'alterner le sens de rotation entre chaque élément.

Dans l'état initial du téléphone portable 1 illustré à la figure 5a, l'accès aux fonctions et/ou données protégées dudit téléphone est bloqué par le processeur principal 36. Le microprocesseur 6a est dans l'état At. Dans cet exemple, l'index 22 de la lunette pivotante 3 est positionné à deux heures relativement à la graduation des heures 23 du cadran 4. En général, la position initiale de l'index 22 porté par la lunette pivotante 3 par rapport à la graduation 23 du cadran 4 n'a pas d'importance.

Pour cet exemple d'utilisation de l'invention, la combinaison choisie authentifiant l'utilisateur et déverrouillant l'accès aux fonctions et/ou données protégées comprend trois nombres de un à douze : 2,10, 5.

Pour s'authentifier et déverrouiller l'accès aux fonctions et/ou données protégées, l'utilisateur commence par presser le bouton d'initialisation 5. Le microprocesseur 6a initialise alors la variable V1 à zéro.

Le premier nombre de la combinaison étant deux, l'utilisateur pivote la lunette pivotante 3 dans le sens horaire pour amener l'index 22 à quatre heures sur la graduation des heures 23 comme illustré sur la figure 5b. La denture 7 de la lunette pivotante 3 entraîne alors la roue de comptage 8, l'axe 11 de ladite roue de comptage et les première et deuxième roues dentées 9,10. Comme la rotation se fait dans le sens horaire, le second mobile d'embrayage-débrayage 13 entraîné par la deuxième roue dentée 10 est en position de débrayage et n'entraîne donc pas l'axe 16 ; tandis que le premier mobile d'embrayage-débrayage 12 entraîné par la première roue dentée 9 est en position d'embrayage, la première roue d'embrayage 12a entraînant alors l'axe 14 de la première roue codeuse 18. La première roue codeuse 18 convertit alors la rotation dudit axe 14 en une succession d'impulsions électriques qu'elle transmet au microprocesseur 6a via la connexion électrique 20, tandis que la seconde roue codeuse 19 reste inactive. Le microprocesseur 6a à la réception desdites impulsions électriques incrémente alors la variable V1 en conséquence.

L'utilisateur doit maintenant composer le second élément de la combinaison. Pour ce faire, il commence par signaler au microprocesseur 6a qu'il va composer le second élément en pivotant la lunette pivotante 3 dans le sens antihoraire d'un pas par rapport à la graduation 23 du cadran 4, amenant ainsi l'index 22 à trois heures. Cette étape est illustrée à la figure 5c.

A nouveau, la denture 7 de la lunette pivotante 3 entraîne alors la roue de comptage 8, l'axe 11 de ladite roue de comptage et les première et deuxième roues dentées 9,10. Comme la rotation se fait dans le sens antihoraire, le second mobile d'embrayage-débrayage 13 entraîné par la deuxième roue dentée 10 entraîne l'axe 16 de la seconde roue codeuse 19 ; tandis que la première roue d'embrayage 12a du premier mobile d'embrayage-débrayage 12 entraînée par la première roue dentée 9 pivote librement sur l'axe 14 de la première roue codeuse 18 sans entraîner ledit axe 14. La seconde roue codeuse 19 convertit alors la rotation dudit axe 16 en une succession d'impulsions électriques qu'elle transmet au microprocesseur 6a via la connexion électrique 21, tandis que la première roue codeuse 18 reste inactive. Le microprocesseur 6a à la réception desdites impulsions électriques initialise une nouvelle variable V2 à zéro.

L'utilisateur peut maintenant composer le second élément de la combinaison, dix, en tournant la lunette pivotante 3 dans le sens antihoraire de dix pas. L'index 22 porté par la lunette pivotante 3 se trouve maintenant à cinq heures par rapport à la graduation 23 du cadran 4 comme illustré sur la figure 5d. Comme précédemment, la rotation de la lunette pivotante 3 entraîne, via la denture 7, la roue de comptage 8, l'axe 11 de ladite roue de comptage 8 et les première et deuxième roues dentées 9, 10. Comme la rotation se fait dans le sens antihoraire, le second mobile d'embrayage-débrayage 13 entraîné par la deuxième roue dentée 10 entraîne l'axe 16 de la seconde roue codeuse 19; tandis que la première roue d'embrayage 12a du premier mobile d'embrayage-débrayage 12 entraînée par la première roue dentée 9 pivote librement sur l'axe 14 de la première roue codeuse 18 sans entraîner ledit axe 14. La seconde roue codeuse 19 convertit alors la rotation dudit axe 16 en une succession d'impulsions électriques qu'elle transmet au microprocesseur 6a via la connexion électrique 21, tandis que la première roue codeuse 18 reste inactive. Le microprocesseur 6a à la réception desdites impulsions électriques incrémente la variable V2 en conséquence.

L'utilisateur doit maintenant composer le troisième et dernier élément de la combinaison de cet exemple. Pour ce faire, il commence par signaler au microprocesseur 6a qu'il va composer le troisième élément en pivotant la lunette pivotante 3 dans le sens horaire d'un pas par rapport à la graduation 23 du cadran 4, amenant ainsi l'index 22 à six heures. Comme décrit plus haut, un signal H est transmis au microprocesseur 6a via le train d'engrenage comprenant la denture 7 de la lunette pivotante 3, la roue de comptage 8, l'axe 11 de la roue de comptage 8, la première roue dentée 9, la première roue d'embrayage 12a du premier mobile d'embrayage-débrayage 12, l'axe 14 de la première roue codeuse 18 et finalement la première roue codeuse 18. Le microprocesseur 6a initialise alors une nouvelle variable V3 à zéro.

L'utilisateur peut maintenant tourner la lunette pivotante 3 dans le sens horaire de cinq pas pour amener l'index 22 à onze heures sur la graduation 23 du cadran 4, comme illustré sur la figure 5e. Le signal H est alors transmis au microprocesseur 6a qui incrémente la variable V3 en conséquence.

La combinaison est maintenant entièrement composée et l'utilisateur doit signaler au microprocesseur 6a que ce dernier peut commencer à comparer la combinaison composée avec celle préalablement enregistrée dans la mémoire non-volatile 6b du microcontrôleur 6. Pour ce faire, l'utilisateur tourne la lunette pivotante 3 d'un pas dans le sens antihoraire (le sens opposé à celui utilisé pour composer le dernier élément de la combinaison), l'index 22 étant maintenant positionné à dix heures par rapport à la graduation 23 du cadran 4, comme illustré sur la figure 5f. Le signal A-H résultant de cette rotation est envoyé au microprocesseur 6a qui compare alors la combinaison composée avec celle préalablement enregistrée. Si les combinaisons coïncident, le microprocesseur 6a commande au processeur principal 36 d'autoriser l'accès aux fonctions et/ou données protégées du téléphone 1 et se remet dans l'état At. Dans le cas contraire, le processeur principal 36 continue de bloquer l'accès aux fonctions et/ou données protégées et le microprocesseur 6a se remet dans l'état At, l'utilisateur pouvant alors tenter de composer à nouveau la combinaison.

Dans une variante, on pourrait faire en sorte que la validation d'un élément de la combinaison, c'est-à-dire le signalement au microprocesseur 6a que la composition de l'élément est terminée et que l'élément suivant va maintenant être composé, ou que la composition de toute la combinaison est terminée, soit effectuée dès le changement de sens de rotation de la lunette pivotante 3 et non pas après une rotation d'un pas dans le sens contraire. Dans cette variante, l'élément suivant de la combinaison serait déterminé par toute l'amplitude de rotation de la lunette pivotante 3 dans le sens contraire. Ainsi, dans le cas de la combinaison 2, 10, 5 décrite plus haut, l'utilisateur déplacerait la lunette pivotante 3 de deux pas dans un sens, puis de dix pas dans l'autre, puis de cinq pas dans le premier sens.

Dans un deuxième mode de réalisation illustré aux figures 6 à 8, un appareil électronique portable selon l'invention comprend un système de verrouillage mécanique empêchant physiquement l'utilisation dudit appareil.

L'appareil selon l'invention illustré aux figures 6 à 8 est un téléphone portable 40 comprenant un corps principal 24 et un clapet 25. Le clapet 25 porte sur sa face extérieure la montre 2 et sur sa face intérieure l'écran du téléphone. Le téléphone 40 comprend la lunette pivotante 3 et les moyens de liaisons (8-21) incluant le microcontrôleur 6 décrits dans le premier mode de réalisation ci-dessus.

Le clapet 25 est relié au corps principal 24 par une charnière 26. La figure 7 est une vue en coupe de la charnière 26.

A l'intérieur de la charnière 26, un verrou en forme de poutre excentrée 27 est commandé par un moteur 28 et peut prendre deux positions. Lorsque la poutre 27 est entièrement logée dans le corps principal 24, le clapet 25 est mobile par rapport au corps 24. Lorsque le clapet 25 est rabattu contre le corps 24, comme montré à la figure 6, cette position est détectée par exemple par un contact électrique et, sous l'action du moteur 28, la poutre 27 vient s'insérer dans un logement 29 pratiqué dans le clapet 25 et verrouille le clapet 25 dans sa position fermée, rabattue. Dans cette position, il est donc impossible d'ouvrir le téléphone portable 40, qui ne peut par conséquent être utilisé, son clavier porté par le corps 24 et son écran porté par le clapet 25 étant inaccessibles. En variante, le verrouillage du clapet 25 peut être commandé par un bouton prévu à cet effet après que le clapet 25 a été rabattu contre le corps 24.

Le moteur 28 est commandé par le microcontrôleur 6 et relié au microprocesseur 6a de celui-ci par une connexion électrique 30 comme illustré sur la figure 8. Lorsque l'utilisateur s'est correctement authentifié en composant une combinaison grâce à la lunette pivotante 3 de la montre 2, le microcontrôleur 6 commande alors au moteur 28 de retirer la poutre 27 de son logement 29. La poutre 27 est alors entièrement logée dans le corps principal 24 et l'utilisateur peut ouvrir le clapet 25 et ainsi le téléphone et avoir accès aux données qui y sont enregistrées par l'intermédiaire du clavier et de l'écran.

En variante, on peut imaginer combiner le premier et le second mode de réalisation. Dans ce cas, l'utilisateur compose la combinaison à l'aide de la lunette pivotante 3, la combinaison est transmise au microcontrôleur 6 par les moyens de liaison (8 à 21), lequel compare cette combinaison avec celle prédéterminée et commande à la fois au moteur 28 le déverrouillage mécanique du clapet 25 et au processeur principal 36 le déverrouillage électronique de fonctions et/ou données protégées. Cette variante utilise ainsi des moyens de blocage, la poutre 27 actionnée par le moteur 28 et le processeur principal 36, à la fois mécaniques et électroniques.

Dans une variante non illustrée du second mode de réalisation, le téléphone portable 40 pourrait comprendre un corps principal et un couvercle coulissant par rapport audit corps principal. Le clavier et l'écran du téléphone sont accessibles dans une position ouverte du couvercle et inaccessibles dans une position fermée du couvercle. Dans cette variante, le couvercle coulissant peut coulisser lorsque la poutre 27 est entièrement logée dans le corps principal tandis que le coulissage dudit couvercle devient impossible lorsque le couvercle est en position fermée et que la poutre 27, actionnée par le moteur 28, s'insère dans un logement du couvercle. Le fonctionnement et les autres composants de cette variante sont en tout point similaires au mode de réalisation précédemment décrit.

En variante également, les moyens de blocage décrit ci-dessus pourraient comprendre plusieurs poutres actionnées par un ou plusieurs moteurs commandés par le microcontrôleur 6.

De manière générale, le second mode de réalisation et ses variantes peuvent s'appliquer à tout type d'appareil électronique portable comprenant deux parties mobiles l'une par rapport à l'autre et pouvant prendre une position fermée où l'utilisation de l'appareil est impossible ou une position ouverte, où l'utilisation est possible, comme un ordinateur portable par exemple.

Les modes de réalisation et les exemples de fonctionnement présentés ci-dessus ont été décrits à titre indicatif et non limitatif.

De manière générale, l'appareil électronique portable selon l'invention peut être un appareil de communication portable, comme un téléphone portable, une console de jeux, un ordinateur portable ou tout autre appareil électronique connu de l'homme du métier.

De même, de manière générale, la lunette pivotante pourrait être remplacée par un autre type d'organe rotatif tel qu'un disque, une bague, un bouton. La montre pourrait être supprimée et remplacée par un cadran ou une graduation spécifique.

L'organe rotatif comprend un index coopérant avec une graduation placée sur l'appareil électronique portable de manière équivalente, la graduation pourrait être portée par l'organe rotatif et l'index coopérant avec ladite graduation être placé sur l'appareil électronique portable.

De manière générale, le bouton d'initialisation peut prendre la forme d'un bouton poussoir, d'un glisseur, d'une touche d'un clavier ou d'un écran tactile ou tout autre forme appropriée. De plus, la fonction remplie par le bouton d'initialisation pourrait être remplie par l'organe rotatif lui-même ou tout autre bouton faisant partie de l'appareil électronique portable.

La fonction remplie par le microcontrôleur 6 pourrait être remplie par le processeur principal du téléphone, associé à une mémoire.

Finalement, l'algorithme illustré à la figure 4 a été décrit à titre d'exemple non limitatif. L'homme du métier est à même d'ajouter des fonctions ou de remplacer certaines fonctions par une suite de fonctions équivalente.

## Revendications

1. Appareil électronique portable (1;40) comprenant un organe rotatif (3) pouvant être pivoté par l'utilisateur pour composer une combinaison comprenant plusieurs éléments, des moyens de blocage (36 ; 27, 28, 29) de l'accès à au moins une fonction ou donnée dudit appareil et des moyens de liaison (6, 8 à 21) connectant l'organe rotatif (3) aux moyens de blocage (36 ; 27, 28, 29) et agencés pour commander aux moyens de blocage (36 ; 27, 28, 29) d'autoriser l'accès à ladite au moins une fonction ou donnée lorsque la combinaison composée par l'utilisateur coïncide avec une combinaison prédéterminée, **caractérisé en ce que** l'organe rotatif (3) et les moyens de liaison (6, 8 à 21) sont agencés pour permettre la composition de la combinaison par des rotations successives de l'organe rotatif (3) dans des sens alternés, l'amplitude de chacune desdites rotations étant représentative d'un élément correspondant de la combinaison, chaque changement du sens de rotation de l'organe rotatif (3) validant la composition de l'élément correspondant à la rotation précédant immédiatement ledit changement.

2. Appareil électronique portable (1;40) selon la revendication 1, dans lequel les moyens de liaison comprennent une unité de traitement électronique (6, 36) commandant les moyens de blocage, au moins une roue codeuse (18) connectée à l'unité de traitement électronique (6, 36) et un engrenage (7, 8, 11, 9, 10, 12, 13) reliant l'organe rotatif (3) à la au moins une roue codeuse (18), de sorte que la au moins une roue codeuse (18) convertit la rotation de l'organe rotatif (3) en une séquence d'impulsions électriques dont le nombre est proportionnel à l'amplitude angulaire de la rotation et transmet ladite séquence à l'unité de traitement électronique (6, 36) et que cette dernière détermine la combinaison composée par l'utilisateur et la compare à la combinaison prédéterminée.

3. Appareil électronique portable (1;40) selon la revendication 2, dans lequel les moyens de liaison comprennent une première et une seconde roue codeuse (18, 19) et l'engrenage (7, 8, 11, 9, 10, 12, 13) reliant l'organe rotatif (3) aux première et seconde roues codeuses (18, 19) comprend au moins une roue dentée (8) en prise avec l'organe rotatif (3) et coaxiale et solidaire de première et seconde roues dentées (9, 10) en prise chacune respectivement avec un premier et second mobile d'embrayage-débrayage (12, 13) montés respectivement sur l'axe (14, 16) de la première et de la seconde roue codeuse (18, 19) de sorte que l'un des axes de la première respectivement seconde roue codeuse (18, 19) est entraîné lorsque l'organe rotatif (3) est pivoté dans le sens horaire tandis que l'autre est entraîné lorsque l'organe rotatif est pivoté dans le sens antihoraire.

4. Appareil électronique portable (1;40) selon l'une des revendications précédentes, dans lequel les moyens de blocage comprennent le processeur principal (36) de l'appareil électronique portable (1;40) adapté à verrouiller et déverrouiller l'accès électronique à ladite au moins une fonction ou donnée de l'appareil.

5. Appareil électronique portable (1;40) selon l'une des revendications précédentes, comprenant deux parties mobiles (24, 25) l'une par rapport à l'autre et pouvant prendre une position fermée où l'utilisation de l'appareil est impossible ou une position ouverte, où l'utilisation dudit appareil est possible, les moyens de blocage (27, 28, 29) comprenant des moyens pour verrouiller mécaniquement les parties mobiles (24, 25) dans leur position fermée.

6. Appareil électronique portable (40) selon la revendication précédente, dans lequel les moyens de blocage comprennent au moins un moteur (28) commandé par les moyens de liaison et actionnant au moins un verrou (27) qui, lorsqu'il est entièrement compris dans une des parties mobiles (24) de l'appareil, autorise lesdites parties (24, 25) à prendre leur position ouverte et qui, lorsqu'il est logé dans les deux parties mobiles (24, 25) à la fois, maintient lesdites parties mobiles (24, 25) dans leur position fermée et les empêche de prendre leur position ouverte.

7. Appareil électronique portable (1;40) selon la revendication l'une des revendications précédentes, dans lequel l'organe rotatif (3) comprend un index (22) coopérant avec une graduation (23) placée sur l'appareil électronique portable.

8. Appareil électronique portable (1;40) selon l'une des revendications 1 à 6, dans lequel l'organe rotatif (3) comprend une graduation coopérant avec un index placé sur l'appareil électronique portable.

9. Appareil électronique portable (1;40) selon l'une des revendications précédentes, **caractérisé en ce que** l'organe rotatif (3) et les moyens de liaison (6, 8 à 21) sont agencés pour permettre ladite composition des éléments de la combinaison sans utilisation d'un écran.

10. Appareil électronique portable (1,40) selon l'une des revendications précédentes, comprenant une montre comportant une lunette pivotante (3) entourant un cadran (4), ladite lunette constituant ledit organe rotatif (3).

11. Appareil électronique portable (1;40) selon l'une des revendications précédentes, comprenant en outre un bouton d'initialisation (5).

12. Appareil électronique portable (1;40) selon l'une des revendications précédentes, consistant en un téléphone portable.

## Claims

1. Portable electronic apparatus (1; 40) comprising a rotary member (3) which can be pivoted by the user to enter a combination comprising several elements, means (36; 27, 28, 29) for blocking access to at least one function or data of said apparatus and linking means (6, 8 to 21) connecting the rotary member (3) to the blocking means (36; 27, 28, 29) and arranged to control the blocking means (36; 27, 28, 29) to authorise the access to said at least one function or data when the combination entered by the user coincides with a predetermined combination, **characterised in that** the rotary member (3) and the linking means (6, 8 to 21) are arranged to allow the entering of the combination by successive rotations of the rotary member (3) in alternate directions, the amplitude of each of said rotations being representative of a corresponding element of the combination, each change in the direction of rotation of the rotary member (3) validating the entering of the element corresponding to the rotation immediately preceding said change.

2. Portable electronic apparatus (1; 40) as claimed in Claim 1, wherein the linking means comprise an electronic processing unit (6, 36) controlling the blocking means, at least one encoder wheel (18) connected to the electronic processing unit (6, 36) and a gear train (7, 8, 11, 9, 10, 12, 13) connecting the rotary member (3) to the at least one encoder wheel (18) such that the at least one encoder wheel (18) converts the rotation of the rotary member (3) into a sequence of electric pulses, the number of which being proportional to the angular amplitude of the rotation, and transmits said sequence to the electronic processing unit (6, 36), and that the latter determines the combination entered by the user and compares it with the predetermined combination.

3. Portable electronic apparatus (1; 40) as claimed in Claim 2, wherein the linking means comprise a first and a second encoding wheel (18, 19) and the gear train (7, 8, 11, 9, 10, 12, 13) connecting the rotary member (3) to the first and second encoding wheel (18, 19) comprises at least one toothed wheel (8) engaged with the rotary member (3) and coaxial and fixedly attached to the first and second toothed wheels (9, 10) each respectively engaged with a first and second coupling-decoupling mobile (12, 13) respectively mounted on the shaft (14, 16) of the first and second encoding wheel (18, 19) such that one of the shafts of the first or second encoding wheel (18, 19) is driven when the rotary member (3) is pivoted in the clockwise direction whilst the other is driven when the rotary member is pivoted in the anti-clockwise direction.

4. Portable electronic apparatus (1; 40) as claimed in any one of the preceding claims, wherein the blocking means comprise the main processor (36) of the portable electronic apparatus (1; 40) adapted to lock and unlock the electronic access to said at least one function or data of the apparatus.

5. Portable electronic apparatus (1; 40) as claimed in any one of the preceding claims, comprising two parts (24, 25) which can move with respect to each other and can assume a closed position where the use of the apparatus is impossible or an open position where the use of said apparatus is possible, the blocking means (27, 28, 29) comprising means for mechanically locking the mobile parts (24, 25) in their closed position.

6. Portable electronic apparatus (40) as claimed in the preceding claim, wherein the blocking means comprise at least one motor (28) controlled by the linking means and actuating at least one latch (27) which, when it is fully contained in one of the mobile parts (24) of the apparatus, authorises said parts (24, 25) to assume their open position and, when it is housed in the two mobile parts (24, 25) at the same time, keeps said mobile parts (24, 25) in their closed position and prevents them from assuming their open position.

7. Portable electronic apparatus (1; 40) as claimed in any one of the preceding claims, wherein the rotary member (3) comprises an index (22) co-operating with a scale (23) placed on the portable electronic apparatus.

8. Portable electronic apparatus (1; 40) as claimed in any one of Claims 1 to 6, wherein the rotary member (3) comprises a scale co-operating with an index placed on the portable electronic apparatus.

9. Portable electronic apparatus (1; 40) as claimed in any one of the preceding claims, **characterised in that** the rotary member (3) and the linking means (6, 8 to 21) are arranged to allow said entering of the elements of the combination without the use of a screen.

10. Portable electronic apparatus (1; 40) as claimed in any one of the preceding claims, comprising a watch having a pivoting bezel (3) surrounding a dial (4), said bezel forming said rotary member (3).

11. Portable electronic apparatus (1; 40) as claimed in any one of the preceding claims, further comprising an initialisation button (5).

12. Portable electronic apparatus (1; 40) as claimed in any one of the preceding claims, consisting of a mobile telephone.

## Patentansprüche

1. Tragbares elektronisches Gerät (1; 40), das ein drehbares Element (3), das durch den Benutzer gedreht werden kann, um eine Kombination einzustellen, die mehrere Elemente umfasst, Mittel zum Sperren (36; 27, 28, 29) des Zugriffs auf mindestens eine Funktion oder ein Datenelement des Geräts, und Verbindungsmittel (6, 8 bis 21) umfasst, die das drehbare Element (3) mit den Sperrmitteln (36; 27, 28, 29) verbinden und gestaltet sind, um die Sperrmittel (36; 27, 28, 29) zu steuern, um den Zugriff auf die mindestens eine Funktion oder das mindestens eine Datenelement zuzulassen, wenn die durch den Benutzer eingestellte Kombination mit einer vorbestimmten Kombination übereinstimmt, **dadurch gekennzeichnet, dass** das drehbare Element (3) und die Verbindungsmittel (6, 8 bis 21) gestaltet sind, um das Einstellen der Kombination durch aufeinanderfolgende Drehungen des drehbaren Elements (3) in wechselnde Richtungen zu ermöglichen, wobei die Größe von jeder der Drehungen für ein Element charakteristisch ist, das der Kombination entspricht, wobei jede Änderung der Drehrichtung des drehbaren Elements (3) die Einstellung des Elements bestätigt, das der Drehung entspricht, die der Änderung unmittelbar vorausgeht.

2. Tragbares elektronisches Gerät (1; 40) nach Anspruch 1, wobei die Verbindungsmittel eine elektronische Verarbeitungseinheit (6, 36), die die Sperrmittel steuert, mindestens eine Codierscheibe (18), die mit der elektronischen Verarbeitungseinheit (6, 36) verbunden ist, und ein Getriebe (7, 8, 11, 9, 10, 12, 13) umfassen, das das drehbare Element (3) mit der mindestens einen Codierscheibe (18) verbindet, derart, dass die mindestens eine Codierscheibe (18) die Drehung des drehbaren Elements (3) in eine Folge elektrischer Impulse umwandelt, deren Anzahl proportional zur Winkelgröße der Drehung ist, und die Folge an die elektronische Verarbeitungseinheit (6, 36) überträgt, und dass diese letztere die durch den Benutzer eingestellte Kombination bestimmt und sie mit der vorbestimmten Kombination vergleicht.

3. Tragbares elektronisches Gerät (1; 40) nach Anspruch 2, wobei die Verbindungsmittel eine erste und eine zweite Codierscheibe (18, 19) umfassen und das Getriebe (7, 8, 11, 9, 10, 12, 13), das das drehbare Element (3) mit der ersten und der zweiten Codierscheibe (18, 19) verbindet, mindestens ein Zahnrad (8) umfasst, das mit dem drehbaren Element (3) im Eingriff ist und mit einem ersten und einem zweiten Zahnrad (9, 10) gleichachsig und fest verbunden ist, die jeweils mit einem ersten beziehungsweise zweiten Kupplungs-Auskupplungs-Drehteil (12, 13) im Eingriff sind, die auf der Achse (14, 16) der ersten beziehungsweise zweiten Codierscheibe (18, 19) angebracht sind, derart, dass die eine der Achsen der ersten beziehungsweise zweiten Codierscheibe (18, 19) mitgenommen wird, wenn das drehbare Element (3) im Uhrzeigersinn gedreht wird, während die andere mitgenommen wird, wenn das drehbare Element im Gegenuhrzeigersinn gedreht wird.

4. Tragbares elektronisches Gerät (1; 40) nach einem der vorhergehenden Ansprüche, wobei die Sperrmittel den Hauptprozessor (36) des tragbaren elektronischen Geräts (1; 40) umfassen, der angepasst ist, um den elektronischen Zugriff auf die/das mindestens eine Funktion oder Datenelement des Geräts zu sperren und freizugeben.

5. Tragbares elektronisches Gerät (1; 40) nach einem der vorhergehenden Ansprüche, das zwei Teile (24, 25) umfasst, die in Bezug zueinander beweglich sind und eine geschlossene Stellung, in der die Verwendung des Geräts unmöglich ist, oder eine offene Stellung einnehmen können, in der die Verwendung des Geräts möglich ist, wobei die Sperrmittel (27, 28, 29) Mittel zum mechanischen Sperren der beweglichen Teile (24, 25) in ihrer geschlossenen Stellung umfassen.

6. Tragbares elektronisches Gerät (40) nach dem vorhergehenden Anspruch, wobei die Sperrmittel mindestens einen Motor (28) umfassen, der durch die Verbindungsmittel gesteuert wird und mindestens einen Riegel (27) betätigt, der, wenn er vollständig in einem der beweglichen Teile (24) des Geräts enthalten ist, zulässt, dass die Teile (24, 25) ihre offene Stellung einnehmen, und der, wenn er gleichzeitig in den zwei beweglichen Teilen (24, 25) aufgenommen ist, die beweglichen Teile (24, 25) in ihrer geschlossenen Stellung hält und verhindert, dass sie ihre offene Stellung einnehmen.

7. Tragbares elektronisches Gerät (1; 40) nach einem der vorhergehenden Ansprüche, wobei das drehbare Element (3) einen Index (22) umfasst, der mit einer Teilung (23) zusammenwirkt, die auf dem tragbaren elektronischen Gerät untergebracht ist.

8. Tragbares elektronisches Gerät (1; 40) nach einem der Ansprüche 1 bis 6, wobei das drehbare Element (3) eine Teilung umfasst, die mit einem Index zusammenwirkt, der auf dem tragbaren elektronischen Gerät untergebracht ist.

9. Tragbares elektronisches Gerät (1; 40) nach einem der vorhergehenden Ansprüche, **dadurch gekennzeichnet, dass** das drehbare Element (3) und die Verbindungsmittel (6, 8 bis 21) gestaltet sind, um das Wählen der Elemente der Kombination ohne Verwendung eines Bildschirms zu ermöglichen.

10. Tragbares elektronisches Gerät (1; 40) nach einem der vorhergehenden Ansprüche, das eine Uhr umfasst, die eine drehbare Lünette (3) umfasst, die ein Zifferblatt (4) umgibt, wobei die Lünette das drehbare Element (3) bildet.

11. Tragbares elektronisches Gerät (1; 40) nach einem der vorhergehenden Ansprüche, das ferner einen Initialisierungsknopf (5) umfasst.

12. Tragbares elektronisches Gerät (1; 40) nach einem der vorhergehenden Ansprüche, das in einem Mobiltelefon besteht.
